**Europäisches Patentamt**

**European Patent Office**

**Office européen des brevets**

(19)

(11) Veröffentlichungsnummer: **0 036 656**
B1

(12) **EUROPÄISCHE PATENTSCHRIFT**

(45) Veröffentlichungstag der Patentschrift:
12.09.84

(51) Int. Cl.³: **F 16 H 3/64**

(21) Anmeldenummer: **81102161.7**

(22) Anmeldetag: **23.03.81**

(54) **Mehrstufiges Lastschalt- und Wendegetriebe.**

(30) Priorität: **26.03.80 US 134274**

(43) Veröffentlichungstag der Anmeldung:
**30.09.81 Patentblatt 81/39**

(45) Bekanntmachung des Hinweises auf die Patenterteilung:
**12.09.84 Patentblatt 84/37**

(84) Benannte Vertragsstaaten:
**AT BE DE FR GB NL**

(56) Entgegenhaltungen:
**DE - A - 2 919 167
DE - C - 150 356
FR - A - 2 240 840
US - A - 3 274 858
US - A - 3 298 252
US - A - 3 946 623**

**KLEIN "Die Planetenrad-Umlauf-getriebe", 1962, CARL
HANSER VERLAG, München Seiten 30, 223**

(73) Patentinhaber: **DEERE & COMPANY, 1 John Deere
Road, Moline Illinois 61265 (US)**

(72) Erfinder: **Madson, Lyle Robert, 2916 Cedar Heights
Drive, Cedar Falls Iowa 50613 (US)**

(74) Vertreter: **Gramm, Werner, Prof. Dipl.-Ing.,
Patentanwälte Gramm + Lins Theodor-Heuss-Strasse 2,
D-3300 Braunschweig (DE)**

## Beschreibung

Die Erfindung betrifft ein mehrstufiges Lastschalt- und Wendegetriebe zum Anschluss an eine Antriebswelle, bestehend aus

- zwei Getriebeeingängen in Form einer Hohlwelle oder dgl. und einer in dieser angeordneten Eingangswelle;

- einer ersten Antriebskupplung zum wahlweisen Ankuppeln der Hohlwelle an die Antriebswelle und einer zweiten Antriebskupplung zum wahlweisen Ankuppeln der Eingangswelle an die Antriebswelle;

- einer zweiten Planetenrad-Getriebeeinheit mit einem ersten drehfest auf der Hohlwelle sitzenden Sonnenrad und einem zweiten drehfest auf der Eingangswelle sitzenden Sonnenrad, mit einem ersten und einem zweiten relativ drehbaren Aussenring, mit einem drehbaren Planetenradträger mit drehbar darauf angeordneten Planetenrädern, die mehrere Doppelplanetenräder aufweisen, die jeweils aus fest verbundenen Rit-zeln ungleichen Durchmessers bestehen, die jeweils mit dem ersten Sonnenrad und dem ersten Aussenring bzw. dem zweiten Sonnenrad und dem zweiten Aussenring kämmen und mit einer ersten Bremse zur wahlweisen Beaufschlagung des ersten oder zweiten Aussenringes;

- einer nachgeordneten dritten Planetenrad-Getriebeeinheit mit einer Verlängerung des Planetenradträgers der vorgeordneten Getriebeeinheit, mit einem ersten und zweiten relativ drehbaren Sonnenrad, mit einem mit dem ersten Sonnenrad verbundenen drehbaren Getriebeausgang, mit einer Bremse zur wahlweisen Festlegung des zweiten Sonnenrades, mit einer Kupplung zum wahlweisen Ankuppeln des zweiten Sonnenrades an das erste Sonnenrad, mit zwei Sätzen von drehbar auf dem Planetenradträger sitzenden Planetenrädern, die auf verschiedenen Achsen drehen und mit den bezügli-chen Sonnenrädern, Aussenringen und miteinan-der kämmen, und mit einem drehbaren Aussenring, der mit den Planetenrädern kämmt und von einer Bremse beaufschlagbar ist.

Ein derartiges Getriebe lässt sich den US-Pa-tentschriften 3 274 858 und 3 298 252 entnehmen. Die den ersten Getriebeeingang bildende Hohlwelle oder dgl. trägt unmittelbar das genannte Sonnenrad und wird unmittelbar von der ersten Antriebskupplung beaufschlagt.

Mit diesem vorbekannten Getriebe lassen sich maximal acht Vorwärts- und vier Rückwärtsstufen schalten. Es gibt jedoch zahlreiche Einsatzbereiche, wo diese Schaltmöglichkeiten nicht ausreichen. Insbesondere bei der Feldbestellung sind viele Schaltstufen mit jeweils nur sehr geringen Geschwindigkeitsveränderungen erwünscht. Bei den bekannten Getrieben fehlt meist auch die Möglichkeit, in jedem erforderlichen Geschwin-digkeitsbereich die optimale Geschwindigkeits-auswahl treffen zu können. So fehlt es häufig an besonders niedrigen Geschwindigkeiten, die für die Feldbearbeitung zweckmässig sind und an mehreren höheren Geschwindigkeiten, die z.B.

für Transportaufgaben zweckmässig sind. Der Erfindung liegt somit die Aufgabe zugrunde, das eingangs erläuterte Getriebe hinsichtlich seiner Schaltmöglichkeiten zu verbessern, so dass es insbesondere für landwirtschaftliche oder Industrie-Traktoren geeignet ist.

Diese Aufgabe wird gemäss der Erfindung dadurch gelöst, dass zwischen die den ersten Getriebeeingang bildende Hohlwelle und das auf der Hohlwelle sitzende Sonnenrad eine erste Planetenrad-Getriebeeinheit geschaltet ist, die folgende Merkmale aufweist:

a) Ein Planetenradträger mit drehbar darauf angeordneten Planetenrädern, die mit einem drehbaren Sonnenrad und einem drehbaren Aussenrad kämmen;

b) ein erstes der drei Teile Sonnenrad, Aussenrad oder Planetenradträger ist über Verbindungsmittel mit der das Sonnenrad tragenden Hohlwelle verbunden;

c) ein zweites der drei genannten Teile ist von einer Bremse beaufschlagbar und über eine Kupplung an einem dritten der drei genannten Teile ankuppelbar, das über die erste Antriebskupplung wahlweise an die Antriebswelle ankuppelbar ist.

Mit einem derartigen Getriebe lassen sich beispielsweise siebzehn Vorwärts- und zehn Rückwärtsstufen schalten. Damit steht für jedes Ar-beitsproblem ein speziell geeigneter Geschwin-digkeitsbereich zur Verfügung.

Die erste und zweite Antriebskupplung sind zweckmässig in einer Kupplungstrommel untergebracht und lassen sich einzeln oder gemeinsam beaufschlagen, um den Kraftfluss von der Antriebswelle eines Motors auf eine erste Planetenrad-Getriebeeinheit und/oder eine dieser nachgeschaltete zweite Planetenrad-Getriebeeinheit zu übertragen. In dieser zweiten Getriebeeinheit wird der Kraftfluss von zwei Eingangswellen auf einen Zwischentrieb bzw. einen Planetenradträger übertragen. Letzterer treibt eine dritte Planetenrad-Getriebeeinheit an. Durch wahlweise Betätigung der Kupplungen und Bremsen in verschiedenen Kombinationen kann die Bedienungsperson zahlreiche Schaltstufen mit über einen weiten Bereich sich erstreckenden Geschwindigkeitsabstufungen erreichen.

Weitere Merkmale und Vorteile der Erfindung ergeben sich aus den Unteransprüchen sowie der konstruktiven Beschreibung.

In der Zeichnung sind zwei als Beispiele die-nende Ausführungsformen der Erfindung darge-stellt. Es zeigen:

Fig. 1 in Diagrammform und zum Teil im Längsschnitt ein mehrstufiges Lastschalt- und Wendegetriebe;
Fig. 2 in schematischer Darstellung eine Ansicht gemäss der Schnittlinie 2–2 in Fig. 1;
Fig. 3 in einer Darstellung gemäss Fig. 2 eine Ansicht gemäss der Schnittlinie 3–3 in Fig. 1;
Fig. 4 in einer Darstellung gemäss Fig. 1 eine abgewandelte Ausführungsform für die erste Planetenrad-Getriebeeinheit und

Fig. 5 in einer Tabelle die Einstellung der Kupplungen und Bremsen zur Erzielung der angegebenen Schaltstufen.

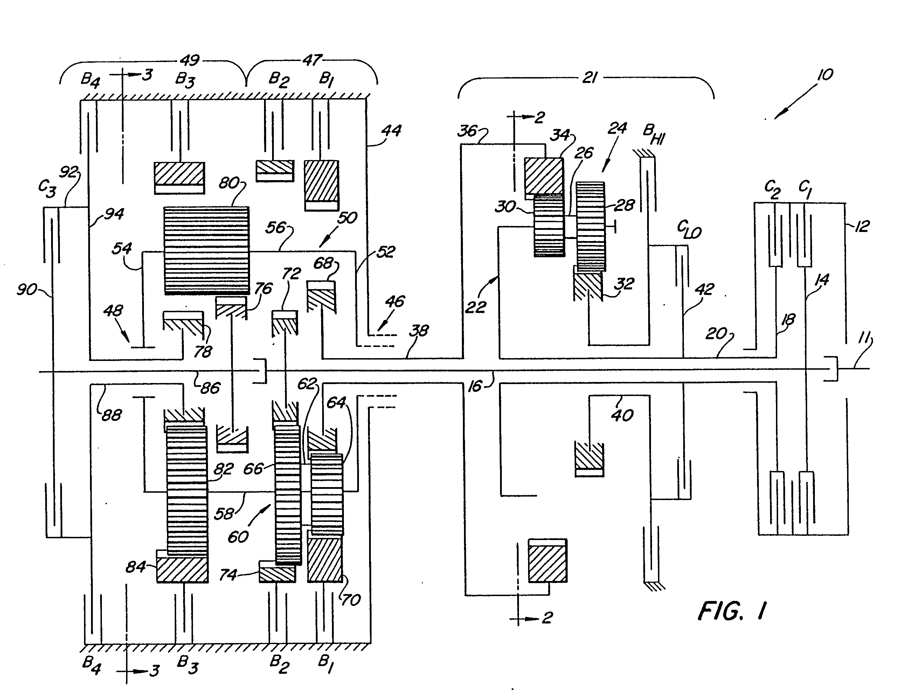

Fig. 1 zeigt ein mehrstufiges Lastschalt- und Wendegetriebe 10, das an einer Antriebswelle 11 angeschlossen ist. Letztere ist üblicherweise die Antriebswelle einer Verbrennungskraftmaschine. Diese erstreckt sich nach hinten in eine Kupplungstrommel 12, die zwei Kupplungen C1 und C2 umschliesst. Die Bezeichnung «Rückwärts» oder auch «Hinten» soll lediglich die Anordnung bezogen auf ein Fahrzeug beschreiben, dient aber nicht zur Einschränkung der Erfindung.

Die Kupplung C1 weist eine angetriebene Kupplungsscheibe 14 auf, die auf einer sich nach hinten erstreckenden Welle 16 sitzt, während die Kupplung C2 aus einer angetriebenen Kupplungsscheibe 18 besteht, die auf einer sich nach hinten erstreckenden Welle 20 sitzt.

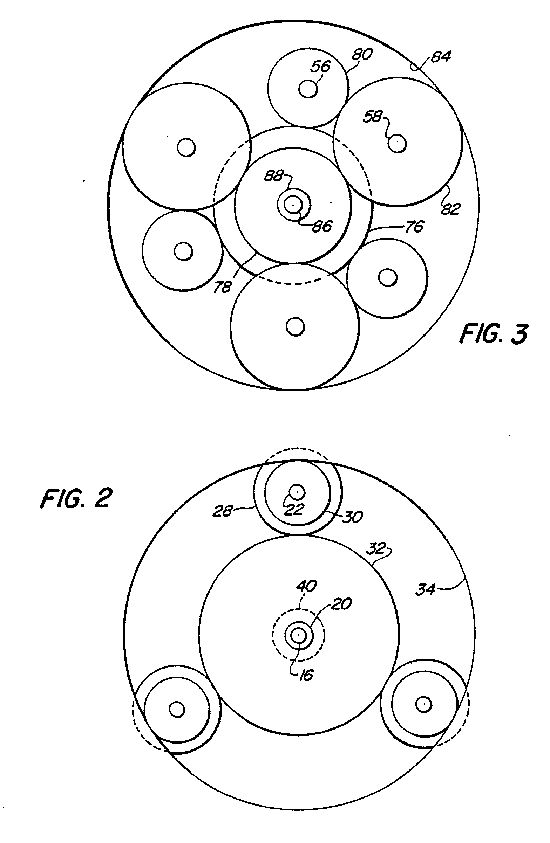

Hinter der Kupplungstrommel 12 ist eine erste Planetenrad-Getriebeeinheit 21 angeordnet. Diese umfasst einen drehbaren Planetenradträger 22, auf dem Planetenräder 24 drehbar montiert sind. Der Planetenradträger 22 sitzt drehfest auf der Welle 20. Gemäss Fig. 2 bestehen die Planetenräder 24 aus mehreren Doppelplanetenrädern 26, von denen vorzugsweise drei um jeweils 120° versetzt angeordnet sind. Jedes Doppelplanetenrad 26 besteht aus zwei koaxial miteinander verbundenen Ritzeln 28, 30 ungleichen Durchmessers, wobei vorzugsweise der Durchmesser des ersten Ritzels 28 grösser ist als der des zweiten Ritzels 30. Das erste Ritzel 28 kämmt mit dem drehbaren Sonnenrad 32, während das zweite Ritzel 30 mit dem drehbaren Aussenring 34 kämmt.

Gemäss Fig. 1 ist der Aussenring 34 über Verbindungsmittel 36 mit einer Hohlwelle 38 verbunden, während das Sonnenrad 32 über Verbindungsmittel 40 mit einer Bremse $B_{HI}$ und einer Kupplung $C_{LO}$ verbunden ist. Letztere umfasst eine angetriebene Kupplungsscheibe 42, die auf der sich nach hinten erstreckenden Welle 20 sitzt. Durch Betätigen der genannten Kupplung kann das Sonnenrad 32 an den Planetenradträger 22 gekoppelt werden, während durch Betätigung der genannten Bremse eine Drehung des Sonnenrades 32 verhindert werden kann.

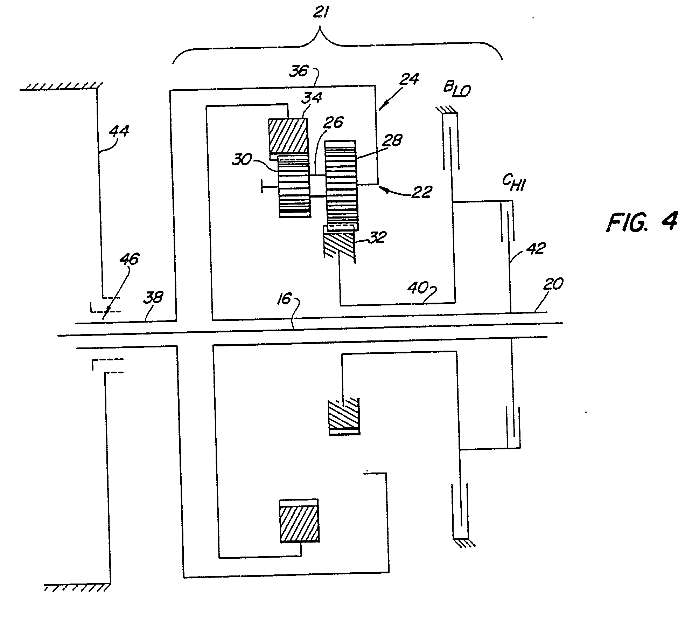

In der abgewandelten Ausführungsform gemäss Fig. 4 ist der Aussenring 34 mit der sich nach hinten erstreckenden Welle 20 verbunden, während die Verbindungsmittel 36 den drehbaren Planetenradträger 22 mit der Hohlwelle 38 verbinden. Hierdurch erhält man eine Untersetzung zwischen der Antriebswelle 11 und der Hohlwelle 38, wenn Kupplung C2 und Bremse $B_{LO}$ eingeschaltet sind. Gemäss Fig. 4 sind die Bremse mit $B_{LO}$ und die Kupplung mit $C_{HI}$ bezeichnet, da der direkte Antrieb die höchste erreichbare Geschwindigkeit ergibt, und dies ist der Fall, wenn die Kupplung $C_{HI}$ eingeschaltet ist.

Bei der Anordnung gemäss Fig. 1 erhält man einen Schnellgang zwischen der Antriebswelle 11 und der Hohlwelle 38, wenn Kupplung C2 und Bremse $B_{HI}$ eingeschaltet sind. Das Wort «Untersetzung» soll bedeuten, dass die Hohlwelle 38 langsamer läuft als die Antriebswelle 11. Das Wort «Schnellgang» bzw. «Übersetzung» bedeutet das Gegenteil. Die einzelnen Übersetzungsverhältnisse, die über oder unter einem Übersetzungsverhältnis von 1:1 (direkter Antrieb) erzielt werden können, hängen von der Anzahl der Zähne auf jedem Zahnrad ab sowie von der Grösse des Sonnenrades 32, des Doppelplanetenrades 26 und des Aussenringes 34 sowie von der Anordnung der Zahnräder zueinander. Alle diese Einzelheiten sind jedem Durchschnittsfachmann bekannt, so dass eine weitere Erläuterung unnötig erscheint.

Hinter der ersten Planetenrad-Getriebeeinheit 21 liegt gemäss Fig. 1 ein Getriebegehäuse 44 mit einer vorderen Öffnung 46 und einer hinteren Öffnung 48. Durch die vordere Öffnung 46 ragen die Welle 16 und die Hohlwelle 38. Das Getriebegehäuse umschliesst eine zweite Planetenrad-Getriebeeinheit 49. Diese zweite und dritte Getriebeeinheit 47, 49 umfasst ein Acht-Stufen-Schaltgetriebe gemäss den US-Patentschriften 3 274 858 und 3 298 252.

Die zweite Planetenrad-Getriebeeinheit 47 umfasst einen drehbaren Planetenradträger 50, auf dem Planetenräder 60 drehbar montiert sind. Der auch als Zwischenantrieb bekannte Planetenradträger 50 weist bei 46 und 48 miteinander fluchtende Öffnungen auf. Ausserdem weist der Planetenradträger 50 eine vordere Wandung 52 und eine hintere Wandung 54 auf, die mehrere Lagerzapfen 56, 58 tragen, auf denen mehrere Planetenräder montiert sind. jedes Planetenrad 60 sitzt auf einem Lagerzapfen 58. In einer typischen Ausbildung umfasst der Planetenradträger 50 drei Lagerzapfen für jeden Planetenradsatz.

Die Planetenräder 60 bestehen aus mehreren Doppelplanetenrädern 62, von denen vorzugsweise drei um jeweils 120° versetzt angeordnet sind. Jedes Doppelplanetenrad 62 besteht aus zwei koaxial miteinander verbundenen Ritzeln 64, 66 ungleichen Durchmessers; von denen vorzugsweise das zweite Ritzel 66 den grösseren Durchmesser aufweist. Das erste Ritzel 64 kämmt mit einem drehbaren ersten Sonnenrad 68 und einem relativ drehbaren ersten Aussenring 70. Das erste Sonnenrad 68 sitzt drehfest auf der Hohlwelle 38. Das zweite Ritzel 66 kämmt mit einem drehbaren zweiten Sonnenrad 72 und einem relativ drehbaren zweiten Aussenring 74. Das zweite Sonnenrad 72 sitzt drehfest auf der sich nach hinten erstreckenden Welle 16, die koaxial innerhalb der Hohlwelle 38 angeordnet ist. Das zweite Sonnenrad 72 liegt hinter dem ersten Sonnenrad 68. Durch Einschalten der Kupplung C1 kann der Kraftfluss von der Antriebswelle 11 über die Welle 16 auf das zweite Sonnenrad 72 übertragen werden.

Die zweite Planetenrad-Getriebeeinheit 47 umfasst ferner erste und zweite Bremsen B1 und B2, mit denen wahlweise der erste bzw. zweite Aussenring 70 bzw. 74 beaufschlagt werden kann.

Die Erdung der beiden genannten Bremsen erfolgt gegenüber dem Getriebegehäuse 44.

Hinter der zweiten Planetenrad-Getriebeeinheit 47 liegt die dritte Planetenrad-Getriebeeinheit 49. Diese umfasst eine Verlängerung des drehbaren Planetenradträgers 50, an den ein Ravigneaux-Getriebe montiert ist. Dieses Getriebe umfasst ein erstes Sonnenrad 76, ein zweites Sonnenrad 78, einen ersten Planetenradsatz 80, einen zweiten Planetenradsatz 82, einen Aussenring 84 und eine Bremse B3. jeder Planetenradsatz 80 und 82 umfasst vorzugsweise drei Planetenräder, die jeweils um 120° versetzt angeordnet sind, wie Fig. 3 erkennen lässt.

Die ersten Planetenräder 80 sitzen auf Lagerzapfen 56 und sind breiter ausgebildet als die zweiten Planetenräder 82. Die ersten Planetenräder 80 liegen unmittelbar hinter der zweiten Planetenrad-Getriebeeinheit 47 und kämmen mit dem ersten Sonnenrad 76 und einem der zweiten Planetenräder 82. Das erste Sonnenrad 76 sitzt auf einem drehbaren Getriebeausgang 86, der sich nach hinten durch die Öffnung 48 erstreckt. Es handelt sich hierbei vorzugsweise um eine Welle, die den Abtrieb für das Getriebe 10 darstellt. Die zweiten Planetenräder 82 liegen unmittelbar vor der rückwärtigen Wandung 54 des Planetenradträgers 50, drehen auf Lagerzapfen 58 und kämmen mit dem zweiten Sonnenrad 78 und dem Aussenring 84. Das zweite Sonnenrad 78 sitzt auf einer sich nach hinten erstreckenden Hohlwelle 88, die den Getriebeausgang 86 umgreift; der Aussenring 84 umschliesst den Planetenradträger 50.

Die am Getriebegehäuse 44 angeordnete Bremse B3 dient zur Beaufschlagung des Aussenringes 84.

Die dritte Planetenrad-Getriebeeinheit 49 umfasst ausserdem eine Kupplung C3 und eine weitere Bremse B4. Die Kupplung C3 besteht aus einer Kupplungsscheibe 90, die auf dem Getriebeausgang 86 sitzt und aus einer Kupplungstrommel 92, die mit einer angetriebenen Scheibe 94 verbunden ist. Durch Einschalten der Kupplung C3 kann das zweite Sonnenrad 78 an das erste Sonnenrad 76 angekoppelt weden. Die Bremse B4 kann die angetriebene Scheibe 94 beaufschlagen und dadurch eine Drehung des zweiten Sonnenrades 78 verhindern.

Die Getriebeanordnung in dem dargestellten und beschriebenen mehrstufigen Lastschalt- und Wendegetriebe 10 ergibt zusammen mit den Kupplungen und Bremsen insgesamt 27 verschiedene Geschwindigkeitsstufen, und zwar siebzehn Vorwärts- und zehn Rückwärtsstufen. Erreicht wird dies durch Antrieb des Planetenradträgers 50 mit acht verschiedenen Übersetzungen, die dann verdreifacht werden durch abwechselnde Betätigung der Kupplung C3, der Bremse B3 und der Bremse B4. Zusätzlich sind drei weitere Geschwindigkeitsstufen möglich durch Einschalten der Kuplungen C1 und $C_{LO}$ und der Bremse $B_{HI}$ in Kombination mit entweder der Kupplung C3, der Bremse B3 oder der Bremse B4. Durch Einschalten der Kupplungen C1 und $C_{LO}$

und der Bremse $B_{HI}$ wird das erste Sonnenrad 68 stationär gehalten, während das zweite Sonnenrad 72 mit der Drehzahl der Antriebswelle 11 rotiert. Dadurch dreht sich der Planetenradträger 50 aufgrund der Rotation der Doppelplanetenräder 62 in umgekehrter Umdrehungsrichtung bezogen auf die Antriebswelle 11.

Einige Schaltstufen liegen zu dicht beieinander oder sind für den täglichen Gebrauch unpraktisch. Tatsächlich werden daher nur fünfzehn Vorwärts- und vier Rückwärtsstufen in der bevorzugten Ausführungsform benutzt. Die verbleibenden Schaltstufen stehen weiterhin zur Verfügung und können gewünschtenfalls auch benutzt werden. Die tatsächlich benutzten Schaltstufen werden nachfolgend in ihrer Wirkungsweise erläutert.

Alle vorstehend erwähnten Kupplungen und Bremsen werden in üblicher Weise hydraulisch betätigt.

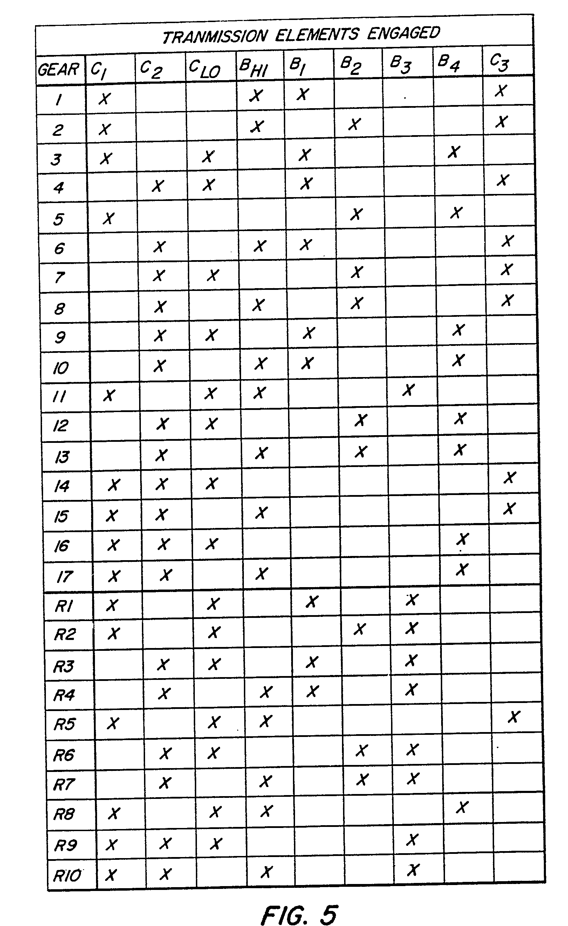

Fig. 5 zeigt eine Tabelle, in der die Einschaltungen der einzelnen Kupplungen und Bremsen angegeben sind, um die verschiedenen Geschwindigkeitsstufen des dargestellten Getriebes 10 zu erhalten. Auf eine Ausnahme wird jedoch hingewiesen: Immer wenn Kraftfluss durch die Kupplung C1 oder eine Kombination der Kupplungen C1 und C2 übertragen werden soll, sollte entweder die Kupplung $C_{LO}$ oder die Bremse $B_{HI}$ eingeschaltet werden. Dadurch können in der ersten Planetenrad-Getriebeeinheit 21 Schäden infolge eines Überdrehens vermieden werden, das sich ergeben kann durch Rückkopplung über das erste Sonnenrad 68 der zweiten Planetenrad-Getriebeeinheit 47 über die Hohlwelle 38, die Verbindungsmittel 36 und den Aussenring 34. Da das Einschalten entweder der Kupplung $C_{LO}$ oder der Bremse $B_{HI}$ keinen Effekt hat auf den Kraftfluss oder die Geschwindigkeitsreduzierung, wenn die Kupplung C1 eingeschaltet und die Kupplung C2 gelöst sind, kann die Einschaltung der Kupplung $C_{LO}$ oder der Bremse $B_{HI}$ gemäss Fig. 5 erfolgen. Jedoch kann ein Ersatz der Kupplung $C_{LO}$ für die Bremse $B_{HI}$ oder umgekehrt eine Änderung der Steuerung erforderlich machen.

Im ersten Vorwärtsgang sind die Kupplungen und Bremsen C1, B1 und C3 eingeschaltet. Die Einschaltung der Kupplung C1 bewirkt eine Rotation des zweiten Sonnenrades 72 mit gleicher Umdrehungszahl wie die Antriebswelle 11. Diese Drehung wiederum bewirkt eine Rotation der Doppelplanetenräder 62 über Betätigung der Planetenräder 66. Das Einschalten der Bremse B1 hält den ersten Aussenring 70 stationär, so dass er als Reaktionselement für die Doppelplanetenräder 62 über die Planetenräder 64 dient. Bei stationärem Aussenring 70 rollen die Doppelplanetenräder 62 um diesen Aussenring 70 ab und bewirken eine Rotation des Planetenradträgers 50 mit einer ersten reduzierten Geschwindigkeit bezogen auf die Umdrehungszahl der Antriebswelle 11. Durch Einschalten der Kupplung C3 wird das zweite Sonnenrad 78 der dritten Planetenrad-Getriebeeinheit 49 an das erste Sonnenrad 76 dieser dritten Getriebeeinheit angekoppelt. Dadurch wird der Planetenradträger 50 an den Getriebeausgang 86 gekoppelt, der dadurch mit derselben reduzierten Geschwindigkeit rotiert wie der Planetenradträger 50.

Im zweiten Vorwärtsgang sind die Kupplungen und die Bremse C1,B2 und C3 eingeschaltet. Der einzige Unterschied gegenüber dem ersten Gang ist die Einschaltung der Bremse B2 anstelle der Bremse B1. Dadurch wird der zweite Aussenring 74 stationär gehalten um so als Reaktionsglied zu wirken gegenüber den Doppelplanetenrädern 62. Dadurch rotiert der Planetenradträger 50 mit einer zweiten reduzierten Geschwindigkeit, die höher liegt als die erste Geschwindigkeit. Ebenso wie beim ersten Gang führt die Einschaltung der Kupplung C3 zu einem Ankoppeln des Getriebeausgangs 86 an den Planetenradträger 50, so dass auch der Getriebeausgang 86 mit einer zweiten reduzierten Geschwindigkeit dreht.

Im dritten Vorwärtsgang sind die Kupplung und die Bremsen C1, B1 und B4 eingeschaltet. Durch Einschaltung der Kupplung C1 und der Bremse B1 wird der Planetenradträger 50 wiederum mit einer ersten reduzierten Geschwindigkeit gegenüber der Antriebswelle 11 angetrieben. Die Bremse B4 hält das zweite Sonnenrad 78 der dritten Getriebeeinheit 49 stationär. Dadurch erfolgt eine Rotation der zweiten Planetenräder 82. Hierdurch rotiert dann der erste Planetenradsatz 80 der dritten Getriebeeinheit 49. Diese Rotation wird wiederum übertragen auf das erste Sonnenrad 76, das dann ebenso rotiert. Da das Sonnenrad 76 mit dem Getriebeausgang 86 verbunden ist, rotiert dieser infolge der Getriebeübersetzung mit einer höheren Geschwindigkeit als der Planetenradträger 50. Diese höhere Geschwindigkeit entspricht einer dritten reduzierten Geschwindigkeit.

Im vierten Vorwärtsgang sind die Kupplungen und die Bremse C1, $C_{LO}$, B1 und C3 eingeschaltet. Durch Einschaltung der Kupplung C2 rotiert die Welle 20 und dementsprechend auch der Planetenradträger 22 mit derselben Geschwindigkeit wie die Antriebswelle 11. Durch Einschaltung der Kupplung $C_{LO}$ wird das erste Sonnenrad 32 der ersten Getriebeeinheit 21 mit der gleichen Geschwindigkeit angetrieben wie die Welle 20. Dies bedeutet, dass die Planetenräder 24 blockiert sind, so dass der Aussenring 34 mit der gleichen Geschwindigkeit angetrieben wird wie die Antriebswelle 11. Der Aussenring 34 wiederum treibt über die Hohlwelle 38 das erste Sonnenrad 68 der zweiten Getriebeeinheit 47 an. Durch Einschalten der Bremse B1 wird der erste Aussenring 70 stationär gehalten und dient als Reaktionselement für die Doppelplanetenräder 62 über die Planetenräder 64. Dadurch rollen die Doppelplanetenräder 62 um den ersten Aussenring 70 ab und drehen dadurch den Planetenradträger mit einer vierten reduzierten Geschwindigkeit, die höher liegt als die dritte reduzierte Geschwindigkeit. Die Einschaltung der Kupplung C3 steuert die Reaktion der dritten Getriebeeinheit 49 wie vorstehend für den ersten Vorwärtsgang beschrieben. Demnach wird die dritte Getriebeeinheit 49 festgehalten, so dass der Getriebeausgang 86 mit derselben Geschwindigkeit dreht wie der Planetenradträger 50 bzw. mit einer vierten reduzierten Geschwindigkeit.

Das Einschalten der Kupplungen und Bremsen für den fünften bis zum dreizehnten Vorwärtsgang ist in der Tabelle gemäss Figur 5 angegeben. Der jeweilige Zusammenhang zwischen Antriebswelle 11 und Getriebeausgang 86 ist ohne weiteres erkennbar unter Berücksichtigung der vorstehenden Erläuterungen für die Vorwärtsgänge 1 bis 4. Für diese weiteren Vorwärtsgänge wird daher auf eine detaillierte Erläuterung verzichtet.

Von den Vorwärtsgängen fünf bis dreizehn werden in der bevorzugten Ausführungsform die Gänge fünf und elf nicht benutzt und zwar aus den vorstehend erläuterten Gründen.

Im 14. Vorwärtsgang sind die Kupplungen C1, C2, $C_{LO}$ und C3 eingeschaltet. Durch Einschaltung der Kupplungen C1 und C2 rotieren die Wellen 16 und 20 mit derselben Geschwindigkeit wie die Antriebswelle 11. Dadurch rotiert der Planetenradträger 22 der ersten Getriebeeinheit 21 mit derselben Geschwindigkeit wie die Antriebswelle 11. Durch Einschalten der Kupplung $C_{LO}$ wird das Sonnenrad 32 der ersten Getriebeeinheit 21 mit derselben Geschwindigkeit angetrieben wie die Antriebswelle 11 und bewirkt dadurch in gleicher Geschwindigkeit eine Rotation der Hohlwelle 38 über den Aussenring 34 und die Verbindungsmittel 36. Das erste und zweite Sonnenrad 68 und 72 der zweiten Getriebeeinheit 47 werden mit gleicher Geschwindigkeit angetrieben und drehen entsprechend auch den Planetenradträger 50. Durch Einschalten der Kupplung C3 wird die dritte Getriebeeinheit 49 stillgehalten, so dass der Getriebeausgang 86 mit gleicher Geschwindigkeit rotiert wie der Planetenradträger 50. In diesem Fall rotiert der Getriebeausgang 86 mit einer 1:1 Übersetzung bezogen auf die Antriebswelle 11.

Im 15. Vorwärtsgang sind die Kupplungen und die Bremse C1, C2, $B_{HI}$ und C3 eingeschaltet. Die Einschaltung der Kupplungen C1 und C2 führt zur Rotation der beiden Wellen 16 und 20 mit gleicher Geschwindigkeit wie die Antriebswelle 11. Dadurch rotiert der Planetenradträger 22 der ersten Getriebeeinheit 21 mit gleicher Geschwindigkeit wie die Antriebswelle 11. Durch Einschalten der Bremse $B_{HI}$ wird das Sonnenrad 32 der ersten Getriebeeinheit 21 stationär gehalten, während der Planetenradträger 22 rotiert. Dadurch wird die Hohlwelle 38 über den Aussenring 34 und die Verbindungsmittel 36 mit einer höheren Geschwindigkeit angetrieben als die Antriebswelle 11. Deshalb rotiert in der zweiten Getriebeeinheit 47 das erste Sonnenrad 68 schneller als das zweite Sonnenrad 72 und bewirkt entsprechend eine schnellere Rotation des Planetenradträgers 50 bezogen auf die Antriebswelle 11. Durch Einschalten der Kupplung C3 wird die dritte Getriebeeinheit 49 festgehalten, so dass der Getriebeausgang 86 mit gleicher Geschwindigkeit rotiert wie der Planetenradträger 50. In diesem Fall liegt die Ausgangsgeschwindigkeit höher als die der Antriebswelle 11. Die Stellungen der Kupplungen und Bremsen für den 16. und 17. Gang sind in der Tabelle gemäss Figur 5 angegeben. Weitere Erläuterungen erübrigen sich.

Im ersten Rückwärtsgang sind die Kupplung und die Bremsen C1, B1 und B3 eingeschaltet. Die Einschaltung der Kupplung C1 führt zu einer Rotation des zweiten Sonnenrades 72 mit gleicher Geschwindigkeit wie die Antriebswelle 11. Diese Rotation bewirkt eine Drehung der Doppelplanetenräder 62 über Beaufschlagung der Planetenräder 66. Durch Einschalten der Bremse B1 wird der erste Aussenring 70 stationär gehalten und dient daher als Reaktionselement für die Doppelplanetenräder 62 über die Planetenräder 64. Ausserdem rollen die Doppelplanetenräder 62 um den Aussenring 70 ab und bewirken dadurch eine Rotation des Planetenradträgers 50 mit einer ersten reduzierten Geschwindigkeit gegenüber der Geschwindigkeit der Antriebswelle 11. Durch Einschalten der Bremse B3 wird der Aussenring 84 der dritten Getriebeeinheit 49 festgehalten. Dadurch erfolgt eine Rotation des zweiten Planetenradsatzes 82 in umgekehrter Richtung gegenüber dem ersten Planetenradsatz 80, der in gleicher Richtung rotiert wie der Planetenradträger 50. Das Kämmen des ersten Planetenradsatzes 80 mit dem ersten Sonnenrad 76 der dritten Getriebeeinheit 49 bewirkt eine Rotation des ersten Sonnenrades 76 in umgekehrter Richtung bezogen auf den Planetenradträger 50. Dementsprechend wird der Getriebeausgang 86 in umgekehrter Richtung angetrieben bezogen auf die Antriebswelle 11.

Die Stellungen der Kupplungen und Bremsen für den zweiten bis zehnten Rückwärtsgang sind in der Tabelle gemäss Figur 5 angegeben. Die entsprechenden Wirkungsweisen sind ohne weiteres ersichtlich für alle Gänge mit Ausnahme des 5. und 8. Gangs. Bei jedem dieser beiden Rückwärtsgänge sind die Kupplungen und Bremsen C1, $C_{LO}$ und $B_{HI}$ zusammen eingeschaltet mit entweder der Kupplung C3 oder der Bremse B4. Durch Einschalten von C1, $C_{LO}$ und $B_{HI}$ wird das erste Sonnenrad 68 der zweiten Getriebeeinheit 47 stationär gehalten, während das zweite Sonnenrad 72 mit der gleichen Geschwindigkeit angetrieben wird wie die Antriebswelle 11. Die zweiten Planetenräder 66 umlaufen das zweite Sonnenrad 72 aber in umgekehrter Richtung infolge der Reaktion, die von den ersten Planetenrädern 64 ausgeübt wird, die mit dem stationär gehaltenen Sonnenrad 68 kämmen. Deshalb dreht der Planetenradträger 50 gegenüber der Antriebswelle 11 in umgekehrter Richtung. Die Einschaltung entweder der Kupplung C3 oder der Bremse B4 führt zu den vorstehend erläuterten Wirkungen, aber hat keinen Einfluss auf die Umdrehungsrichtung des Getriebeausganges 86.

Bei der bevorzugten Ausführungsform werden der 4., 5., 6., 8., 9. und 10. Rückwärtsgang nicht benutzt.

**Patentansprüche**

1. Mehrstufiges Lastschalt- und Wendegetriebe zum Anschluss an eine Antriebswelle (11), bestehend aus
- zwei Getriebeeingängen in Form einer Hohlwelle (20,38) oder dgl. und einer in dieser angeordneten Eingangswelle (16);
- einer ersten Antriebskupplung (C2) zum wahlweisen Ankuppeln der Hohlwelle (20) an die Antriebswelle (11) und einer zweiten Antriebskupplung (C1) zum wahlweisen Ankuppeln der Eingangswelle (16) an die Antriebswelle (11);
- einer zweiten Planetenrad-Getriebeeinheit (47) mit einem ersten drehfest auf der Hohlwelle (38) sitzenden Sonnenrad (68) und einem zweiten drehfest auf der Eingangswelle (16) sitzenden Sonnenrad (72), mit einem ersten (70) und einem zweiten (74) relativ drehbaren Aussenring, mit einem drehbaren Planetenradträger (50) mit drehbar darauf angeordneten Planetenrädern (60), die mehrere Doppelplanetenräder (62) aufweisen, die jeweils aus fest verbundenen Ritzeln (64,66) ungleichen Durchmessers bestehen, die jeweils mit dem ersten Sonnenrad (68) und dem ersten Aussenring (70) bzw. dem zweiten Sonnenrad (72) und dem zweiten Aussenring (74) kämmen und mit einer ersten (B1) und zweiten (B2) Bremse zur wahlweisen Beaufschlagung des ersten oder zweiten Aussenringes (70,74);
- einer nachgeordneten dritten Planetenrad-Getriebeeinheit (49) mit einer Verlängerung des Planetenradträgers (50) der vorgeordneten Getriebeeinheit (47), mit einem ersten (76) und zweiten (78) relativ drehbaren Sonnenrad, mit einem mit dem ersten Sonnenrad (76) verbundenen drehbaren Getriebeausgang (86), mit einer Bremse (B4) zur wahlweisen Festlegung des zweiten Sonnenrades (78), mit einer Kupplung (C3) zum wahlweisen Ankuppeln des zweiten Sonnenrades (78) an das erste Sonnenrad (76), mit zwei Sätzen von drehbar auf dem Planetenradträger (50) sitzenden Planetenrädern (80,82), die auf verschiedenen Achsen (56,58) drehen und mit den bezüglichen Sonnenrädern (76,78), Aussenringen und miteinander kämmen, und mit einem drehbaren Aussenring (84), der mit den Planetenrädern (82) kämmt und von einer Bremse (B3) beaufschlagbar ist, dadurch gekennzeichnet, dass zwischen die den ersten Getriebeeingang bildende Hohlwelle (20) und das auf der Hohlwelle (38) sitzende Sonnenrad (68) eine erste Planetenrad-Getriebeeinheit (21) geschaltet ist, die folgende Merkmale aufweist:
a) Ein Planetenradträger (22) mit drehbar darauf angeordneten Planetenrädern (24) die mit einem drehbaren Sonnenrad (32) und einem drehbaren Aussenrad (34) kämmen;
b) ein erstes der drei Teile Sonnenrad (32), Aussenrad (34) oder Planetenradträger (22) ist über Verbindungsmittel (36) mit der das Sonnenrad (68) tragenden Hohlwelle (38) verbunden;
c) ein zweites der drei genannten Teile (32,34,22) ist von einer Bremse ($B_{H1}$, $B_{LO}$)beaufschlagbar und über eine Kupplung ($C_{LO}$, $C_{Hi}$) an einem dritten der drei genannten Teile (32,34,22) ankuppelbar, das über die erste Antriebskupplung (C2) wahlweise an die Antriebswelle (11) ankuppelbar ist.

2. Getriebe nach Anspruch 1, dadurch gekennzeichnet, dass die Planetenräder (24) der ersten Planetenrad-Getriebeeinheit (21) mehrere Doppelplanetenräder (26) aufweisen.

3. Getriebe nach Anspruch 2, gekennzeichnet durch drei Doppelplanetenräder (26).

4. Getriebe nach Anspruch 2 oder 3, dadurch gekennzeichnet, dass jedes Doppelplanetenrad (26) zwei koaxial miteinander verbundene Ritzel (28,30) ungleichen Durchmessers aufweist, von denen das erste Ritzel (28) mit dem Sonnenrad (32) und das zweite Ritzel (30) mit dem Aussenring (34) kämmen.

5. Getriebe nach Anspruch 4, dadurch gekennzeichnet, dass der Durchmesser des ersten Ritzels (28) grösser ist als der des zweiten Ritzels (30).

6. Getriebe nach einem der vorhergehenden Ansprüche, dadurch gekennzeichnet, dass die Hohlwelle (38) mit dem Aussenring (34) der ersten Planetenrad-Getriebeeinheit (21) verbunden ist, deren drehbarer Planetenradträger (22) wahlweise an die Antriebswelle (11) ankuppelbar ist. (Figur 1).

7. Getriebe nach einem der Ansprüche 1 bis 5, dadurch gekennzeichnet, dass die Hohlwelle (38) mit dem drehbaren Planetenradträger (22) der ersten Planetenrad-Getriebeeinheit (21) verbunden ist, deren Aussenring (34) wahlweise an die Antriebswelle (11) ankuppelbar ist. (Figur 4).

8. Getriebe nach einem der vorhergehenden Ansprüche, dadurch gekennzeichnet, dass die Planetenräder (60) der zweiten Planetenrad-Getriebeeinheit (47) drei Doppelplanetenräder (62) aufweisen.

9. Getriebe nach einem der vorhergehenden Ansprüche, dadurch gekennzeichnet, dass die zwei Sätze von Planetenrädern (80,82) der dritten Planetenrad-Getriebeeinheit (49) je drei Planetenräder (80,82) aufweisen.

## Claims

1. A multi-speed powershift transmission for connection to a driving shaft (11), said transmission comprising:
- two transmission input members in form of a hollow shaft (20,38) or like, and an input shaft (16) arranged in said hollow shaft;
- a first drive clutch (C 2) for selectively connecting the hollow shaft (20) to the driving shaft (11), and a second drive clutch (C 1) for selectively connecting the input shaft (16) to the driving shaft (11);
- a second planetary transmission section (47) comprising: a first sun gear (68) fixably mounted on said hollow shaft (38), and a second sun gear (72) fixably mounted on said input shaft (16); a first (70) and second (74) relatively rotatable outer ring; a rotatable planet carrier (50) with planet gear means (60) rotatably mounted on said rotatable planet carrier and having a plurality of planet cluster gears (62), each of said planet cluster gears comprising rigidly connected pinion gears (64,66) having unequal diameters, said planet cluster gears meshing with both said first sun gear (68) and said first outer ring (70) or said second sun gear (72) and said second outer ring (74), respectively; a first (B 1) and second (B 2) brake for selectively actuating said first or second outer ring (70,74);
- a third downstream planetary transmission section (49) comprising:
an extension of said rotatable planet carrier (50) of said upstream transmission section (47); a first (76) and second (78) relatively rotatable sun gear; a rotatable output member (86) connected to said first sun gear (76); a brake (B 4) for selectively locking said second sun gear (78); a clutch (C 3) for selectively connecting said second sun gear (78) to said first sun gear (76); two sets of planet gear means (80,82) rotatably mounted on said planet carrier (50) and rotating on different axes (50,58) and meshing with said respective sun gears (76,78), outer rings and with each other; and a rotatable outer ring (84) which meshes with said planet gear means (82) and which can be actuated by a brake (B 3), characterized in that:
a first planetary transmission section (21) is connected betwen said hollow shaft (20) forming the first transmission input and said sun gear (68) mounted on said hollow shaft (38); said first planetary transmission section comprising the following features:
a) a rotatable planet carrier (22) with planet gear means (24) rotatably mounted thereon and meshing with a rotatable sun gear (32) and a rotatable outer gear (34);
b) a first of the three parts sun gear (32), outer gear (34) or planet carrier (22) is connected by means of connecting means (36) to said hollow shaft (38) carrying said sun gear (68);
c) a second of the three mentioned parts (32,34,22) can be actuated by a brake $(B_{H1}, B_{LO})$ and connected via a clutch $(C_{LO}, C_{Hi})$ to a third of the three mentioned parts (32,34,22), which is, via the first drive clutch (C 2), selectively connectible to the driving shaft (11).

2. Transmission according to Claim 1, characterized in that said planet gear means (24) of said first planetary transmission section (21) comprise a plurality of cluster gears (26).

3. Transmission according to Claim 2, characterized by three cluster gears (26).

4. Transmission according to Claim 2 or 3, characterized in that each of said cluster gears (26) comprises two coaxially connected pinion gears (28,30) of unequal diameters, said first pinion gear (28) meshing with said sun gear (32) and said second pinion gear (30) meshing with said outer ring (34).

5. Transmission according to Claim 4, characterized in that the diameter of said first pinion gear (28) is larger than the diameter of said second pinion gear (30).

6. Transmission according to one of the preceding Claims, characterized in that said hollow shaft (38) is connected to said outer ring (34) of said first planetary transmission section (21), said rotatable planet carrier (22) of which can be selectively connected to said driving shaft (11) (Figure 1).

7. Transmission according to one of the Claims 1 to 5, characterized in that said hollow shaft (38) is connected to said rotatable planet carrier (22) of said first planetary transmission section (21), said outer ring (34) of which can be selectively connected to said driving shaft (11) (Figure 4).

8. Transmission according to one of the preceding Claims, characterized in that said planet gear means (60) of said second planetary transmission section (47) comprise three cluster gears (62).

9. Transmission according to one of the preceding Claims, characterized in that each of said two sets of planet gear means (80,82) of said third planetary transmission section (49) comprises three planet gear means (80,82).

**Revendications**

1. Mécanisme de changement de vitesse à plusieurs rapports pouvant être commandé en charge, avec marche arrière destiné à être raccordé à un arbre moteur (11), constitué par:
- deux organes d'entrée sous forme d'un arbre creux (20, 38) ou analogue et d'un arbre d'entrée (16) disposé dans le précédent;
- un premier accouplement d'entraînement (C2) pour l'accouplement sélectif de l'arbre creux (20) avec l'arbre moteur (11) et un second accouplement d'entraînement (C1) pour l'accouplement sélectif de l'arbre d'entrée (16) avec l'arbre moteur (11);
- un second ensemble à train épicycloïdal (47) comprenant un premier planétaire (68) calé angulairement sur l'arbre creux (38) et un second planétaire (72) calé angulairement sur l'arbre d'entrée (16); une première couronne extérieure (70) et une seconde couronne extérieure (74) pouvant tourner l'une par rapport à l'autre; un porte-satellites rotatif (50) comportant des satellites (60) montés sur lui à rotation et comprenant plusieurs doubles satellites (62) qui sont constitués chaque fois par des pignons (64, 66) de diamètres différents reliés rigidement entre eux, ces pignons engrenant chaque fois avec le premier planétaire (68) et la première couronne extérieure (70) ou avec le second planétaire (72) et la seconde couronne extérieure (74), et un premier frein (B1) et un second frein (B2) pouvant agir sélectivement sur la première ou la seconde couronne extérieure (70, 74);
- un troisième ensemble à train épicycloïdal (49) monté en aval, comprenant un prolongement du porte-satellites (50) de l'ensemble à train épicycloïdal (47) monté en amont un premier planétaire (76) et un second planétaire (78) pouvant tourner l'un par rapport à l'autre, un premier organe de sortie rotatif (86) relié au premier planétaire (76), un frein (B4) pouvant immobiliser sélectivement le second planétaire (78), un accouplement (C3) pour l'accouplement sélectif du second planétaire (78) avec le premier planétaire (76), deux jeux de satellites (80, 82) montés à rotation sur le porte-satellites (50), tournant autour d'axes différents (56, 58) et engrenant avec les planétaires correspondants (76, 78), les couronnes extérieures et l'un avec l'autre, et une couronne extérieure rotative (84) engrenant avec les satellites (82) et pouvant être soumise à l'action d'un frein (B3), caractérisé en ce qu'il est prévu, entre l'arbre creux (20) formant le premier organe d'entrée du mécanisme et le planétaire (68) monté sur l'arbre creux (38), un premier ensemble à train épicycloïdal (21) présentant les particularités suivantes:
a) un porte-satellites (22) comprenant des satellites (24) montés à rotation sur lui et engrenant avec un planétaire rotatif (32) et une couronne extérieure rotative (34);
b) un premier parmi les trois organes formant le planétaire (32), la couronne extérieure (34) ou le porte-satellites (22) est relié par des moyens de liaison (36) à l'arbre creux (38) portant le planétaire (68);
c) un second parmi les trois organes mentionnés (32, 34, 22) peut être soumis à l'action d'un frein (B$_{HI}$, B$_{LO}$) et peut être accouplé par un accouplement (C$_{LO}$, C$_{HI}$) à un troisième parmi les trois organes mentionnés (32, 34, 22), qui peut être accouplé sélectivement par le premier accouplement d'entraînement (C2) à l'arbre moteur (11).

2. Mécanisme suivant la revendication 1, caractérisé en ce que les satellites (24) du premier ensemble à train épicycloïdal (21) comportent plusieurs satellites doubles (26).

3. Mécanisme suivant la revendication 2, caractérisé par trois doubles satellites (26).

4. Mécanisme suivant la revendication 2 ou 3, caractérisé en ce que chaque double satellite (26) comprend deux pignons (28, 30) reliés entre eux coaxialement et ayant des diamètres différents, parmi lesquels le premier pignon (28) engrène avec le planétaire (32), tandis que le second pignon (30) engrène avec la couronne extérieure (34).

5. Mécanisme suivant la revendication 4, caractérisé en ce que le diamètre du premier pignon (28) est plus grand que celui du second pignon (30).

6. Mécanisme suivant l'une quelconque des revendications précédentes, caractérisé en ce que l'arbre creux (38) est relié à la couronne extérieure (34) du premier ensemble à train épicycloïdal (21), dont le porte-satellites rotatif (22) peut être accouplé sélectivement à l'arbre moteur (11) (Fig. 1).

7. Mécanisme suivant l'une quelconque des revendications 1 à 5, caractérisé en ce que l'arbre creux (38) est relié au porte-satellites rotatif (22) du premier ensemble à train épicycloïdal (21), dont la couronne extérieure (34) peut être accouplée sélectivement à l'arbre moteur (11) (Fig. 4).

8. Mécanisme suivant l'une quelconque des revendications précédentes, caractérisé en ce que les satellites (60) du second ensemble à train épicycloïdal (47) comportent trois doubles satellites (62).

9. Mécanisme suivant l'une quelconque des revendications précédentes, caractérisé en ce que les deux jeux de satellites (80, 82) du troisième ensemble à train épicycloïdal (49) comportent chacun trois satellites (80, 82).

FIG. I

FIG. 3

FIG. 2

FIG. 4

| | TRANMISSION ELEMENTS ENGAGED | | | | | | | | |
|---|---|---|---|---|---|---|---|---|---|
| GEAR | $C_1$ | $C_2$ | $C_{LO}$ | $B_{HI}$ | $B_1$ | $B_2$ | $B_3$ | $B_4$ | $C_3$ |
| 1 | X | | | X | X | | | | X |
| 2 | X | | | X | | X | | | X |
| 3 | X | | X | | X | | | X | |
| 4 | | X | X | | X | | | | X |
| 5 | X | | | | | X | | X | |
| 6 | | X | | X | X | | | | X |
| 7 | | X | X | | | X | | | X |
| 8 | | X | | X | | X | | | X |
| 9 | | X | X | | X | | | X | |
| 10 | | X | | X | X | | | X | |
| 11 | X | | X | X | | | X | | |
| 12 | | X | X | | | X | | X | |
| 13 | | X | | X | | X | | X | |
| 14 | X | X | X | | | | | | X |
| 15 | X | X | | X | | | | | X |
| 16 | X | X | X | | | | | X | |
| 17 | X | X | | X | | | | X | |
| R1 | X | | X | | X | | X | | |
| R2 | X | | X | | | X | X | | |
| R3 | | X | X | | X | | X | | |
| R4 | | X | | X | X | | X | | |
| R5 | X | | X | X | | | | | X |
| R6 | | X | X | | | X | X | | |
| R7 | | X | | X | | X | X | | |
| R8 | X | | X | X | | | | X | |
| R9 | X | X | X | | | | X | | |
| R10 | X | X | | X | | | X | | |

## FIG. 5